(19)

**Europäisches Patentamt**

**European Patent Office**

**Office européen des brevets**

(11) **EP 4 632 985 A1**

(12) **EUROPEAN PATENT APPLICATION**

(43) Date of publication:
**15.10.2025 Bulletin 2025/42**

(21) Application number: **24169470.2**

(22) Date of filing: **10.04.2024**

(51) International Patent Classification (IPC):
**H02J 3/00** $^{(2006.01)}$  **H02M 1/00** $^{(2006.01)}$
**H02M 1/32** $^{(2007.01)}$  **H02J 3/38** $^{(2006.01)}$

(52) Cooperative Patent Classification (CPC):
**H02J 3/001; H02M 1/32;** H02J 3/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ETH Zurich**
**8092 Zurich (CH)**

(72) Inventors:
• **DÖRFLER, Florian**
  **5408 Ennetbaden (CH)**
• **HE, Xiuqiang**
  **8057 Zürich (CH)**
• **DESAI, Maitraya Avadhut**
  **8046 Zürich (CH)**
• **HUANG, Linbin**
  **8053 Zürich (CH)**

(54) **METHOD AND A CONTROLLER FOR CONTROLLING A GRID FORMING CONVERTER**

(57)    A grid forming **converter (32),** is arranged to provide a single-phase or multi-phase **converter current.** Its control comprises:
• a grid forming controller (33) determining (101) a **voltage reference value** $\hat{v}$;
• a voltage controller (34) determining (102) a **current reference value** $\hat{\imath}$;
• a current limiter (35) determining (103), from the current reference value $\hat{\imath}$, a **limited current reference value** $\overline{\hat{\imath}}$;
• a current controller (36) controlling (104) the converter (32) to provide the converter current $i$ prescribed by the **limited current reference value** $\overline{\hat{\imath}}$.

**Therein,** at least while a fault condition is present, the voltage controller (34) generates a current reference $\hat{\imath}$ based on a relationship between a representative $\underline{\hat{v}}_{rep}$ of a virtual internal voltage $\hat{\underline{v}}_{vir}$ and a representative $\underline{v}_{rep}$ of an actual voltage value $\underline{v}$,
the phase angle of the virtual internal voltage $\hat{\underline{v}}_{vir}$ is controlled to match with the phase angle reference of the voltage reference $\hat{v}$ and the magnitude of the virtual internal voltage $\hat{\underline{v}}_{vir}$ is adaptively changed depending on overcurrent conditions.

**Fig. 1**

EP 4 632 985 A1

**Description**

The invention relates to circuit arrangements for ac mains or ac distribution networks. It relates to a method and a controller for controlling a grid forming converter as described in the preamble of the corresponding independent claims.

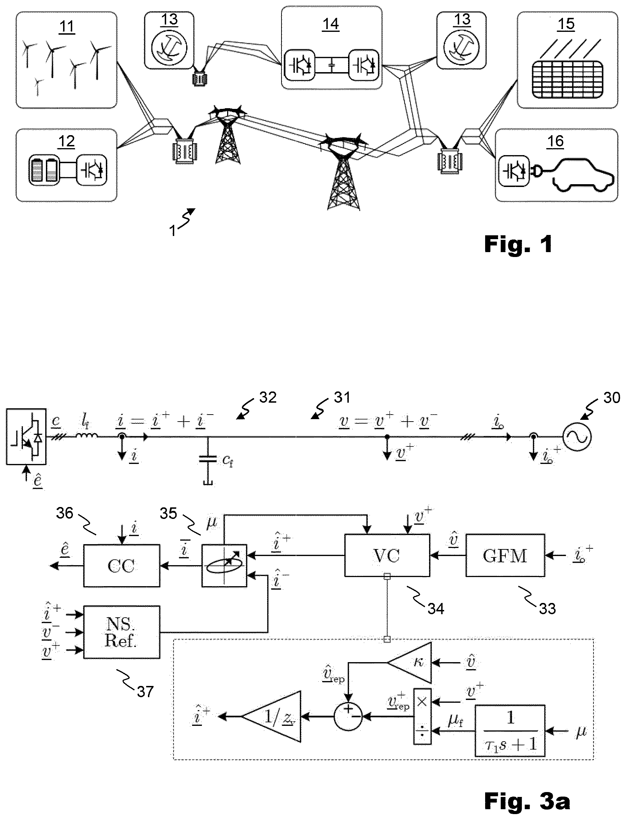

The ubiquitous penetration of renewable energy sources in power grids has been displacing a number of conventional fossil fuel-based power plants. Power electronic converters play a key role in connecting renewable energy generation to power grids, as can be seen in **Fig. 1. Fig. 1** schematically shows a power grid 1 comprising wind farms 11, energy storage 12, synchronous generators 13, high-voltage DC systems 14, solar farms 15 and smart loads 16. Grid-forming responsibilities initially shouldered by conventional generating devices (i.e., synchronous generators, SGs) for establishing and regulating grid frequency and voltage are increasingly being transferred to power electronic converter systems. Grid-forming control is seen as a promising solution to control power electronic converters as grid-forming voltage sources participating in regulating grid frequency and voltage autonomously. Therefore, converters with grid-forming controls, namely grid-forming converters, are becoming indispensable assets in modern and future power systems. These assets will be spread throughout future power grids, including but not limited to renewable energy generation systems, flexible high-voltage DC (HVDC) transmission systems, Flexible AC transmission systems (FACTS), smart loads, and energy storage systems, as illustrated in **Fig. 1.**

Although a grid-forming converter behaves as a voltage source, its current output needs to be limited under disturbances, e.g., grid faults, to prevent a grid-forming converter from overcurrent damage, which is very different from conventional synchronous generators. More specifically, when subjected to grid faults, synchronous generators can provide up to 5-7 p.u. (i.e., 500%-700%) fault current. However, semiconductor-based converters can only provide a fault current of about 1.2 p.u. (120%). Hence, it is important to configure some current limiting strategies/measures in grid-forming converters' control algorithms to protect them from overcurrent damage. Moreover, it is also essential that grid-forming converters maintain transient stability under grid faults (i.e., maintain stability when transitioning from one operating state under normal conditions to another under grid faults) for a successful fault ride-through, as required by grid code specifications, such as NC RfG 2.0 Amendment Proposal and IEEE Std 2800.

A problem is how to design a stability-guaranteed current limiting strategy for grid-forming converters. Both the objectives of limiting current (a requirement for device security) and maintaining stability (the requirement for fault ride-through and stable grid-forming operation) are of significant practical importance. The problem is becoming progressively more significant due to the growing prevalence of grid-forming converters in current and future power grids.

In current research and development, two types of current limiting methods are widely used: saturation limiter-based current-forming methods and virtual impedance-based voltage-forming methods. These two types of methods offer distinct advantages and disadvantages in terms of fast current limiting, grid-forming functionality maintenance (i.e., voltage-forming functionality maintenance, considering that power systems operate as voltage sources by default), adaptability, simplicity, robustness, etc., as outlined in the following paragraph.

(1) Saturation limiter-based current-forming methods: The favorable advantages of current-forming methods include: fast response in overcurrent limiting and full utilization of the maximum overcurrent capability. On the other hand, however, the saturation of current limiters will immediately lead to the integrator windup of the voltage control loop and subsequently result in instability. Many recent studies have suggested deactivating the voltage control loop and developed various remedies to stabilize the converter under current saturation. For example, Linbin Huang, Huanhai Xin, Zhen Wang, et al. "Transient stability analysis and control design of droop-controlled voltage source converters considering current limitation." IEEE Transactions on Smart Grid 10.1 (2017): 578-591, discloses a current-forming control together with a q-axis voltage feedback stabilizing strategy. The normal voltage-forming functionality, however, can no longer be effectively maintained using the current-forming control. This becomes the most crucial technical bottleneck in using saturation limiter-based current-forming methods.

(2) Virtual impedance or virtual admittance-based voltage-forming methods: Virtual impedance/admittance methods and their variants (such as the threshold virtual impedance control) retain grid-forming controls, thereby maintaining voltage-forming functionality. See, for example, Rosso, Roberto, Soenke Engellken, and Marco Liserre. "On the implementation of an FRT strategy for grid-forming converters under symmetrical and asymmetrical grid faults." IEEE Transactions on Industry Applications 57.5 (2021): 4385-4397. However, virtual impedance methods suffer from many disadvantages, including: slow response failing to limit the overcurrent's first peak; either low adaptability when using fixed impedance for different disturbances or high tuning complexity when using adaptive impedance; more complicated tuning concerning unbalanced conditions (asymmetrical grid faults account for more than 90% of grid faults). For both virtual impedance and virtual admittance methods, the resulting virtual impedance/admittance is current-dependent, leading to insufficient robustness in terms of stability performance and also bringing remarlkable difficulties in stability analysis.

It is therefore an object of the invention to create a method and a controller for controlling a grid forming converter of the type mentioned initially, which overcomes the disadvantages of the two widely used methods mentioned above.

These objects are achieved by a method and a controller for controlling a grid forming converter according to the corresponding independent claims.

The method serves for controlling a grid forming **converter,** the converter being arranged to provide a single-phase or multi-phase **converter current** at a single-phase or multi-phase **converter terminal voltage.** The method comprises the steps of:

- a grid forming controller determining, from a **converter current value** $\underline{i}_o$, a **voltage reference value** $\hat{\underline{v}}$;

- a voltage controller determining, from the voltage reference value $\hat{\underline{v}}$ and from an **actual voltage value** $\underline{v}$ representing the converter terminal voltage, a **current reference value** $\hat{\underline{i}}$ ;

- a current limiter, being a circular or elliptical current limiter, determining, from the current reference value $\hat{\underline{i}}$, a **limited current reference value** $\overline{\underline{i}}$ ;

- a current controller controlling the converter to provide the converter current $i$ prescribed by the **limited current reference value** $\overline{i}$.

**Therein,** at least while a fault condition is present, the voltage controller generates a current reference $\hat{\underline{i}}$ based on a relationship between a representative $\hat{\underline{v}}_{rep}$ of a virtual internal voltage $\hat{\underline{v}}_{vir}$ and a representative of $\underline{v}_{rep}$ of an actual voltage value $\underline{v}$, the phase angle of the virtual internal voltage $\hat{\underline{v}}_{vir}$ is controlled to match with the phase angle reference of the voltage reference $\hat{\underline{v}}$ and the magnitude of the virtual internal voltage $\hat{\underline{v}}_{vir}$ is adaptively changed depending on overcurrent conditions.

The representative $\hat{\underline{v}}_{rep}$ of the virtual internal voltage can be the virtual internal voltage $\hat{\underline{v}}_{vir}$ itself or a scalar multiple of the virtual internal voltage $\hat{\underline{v}}_{vir}$. The representative $\underline{v}_{rep}$ of the actual voltage can be the actual voltage $\underline{v}$ itself or a scalar multiple of the actual voltage $\underline{v}$. Note that the above voltage and current symbols, for unbalanced conditions, represent the respective positive-sequence components, which can be explicitly denoted as $\hat{\underline{i}}^+$, $\underline{v}_{rep}^+$ etc.

As a result, an innovative cross-forming current limiting strategy is provided, employing current limiters to retain fast current limiting performance while introducing simple but effective feedback controls into the voltage control loop to maintain the voltage-angle-forming and current-magnitude-forming functionality (hence referred to as cross-forming functionality). As a consequence, it is able to quickly limit the output current of grid-forming converters at a prespecified limit under grid disturbances, and meanwhile also ensure the converters operate as angle-forming voltage sources during current saturation. Notably, the implementation of the strategy is quite simple and backward compatible with the standard virtual admittance control. The cross-forming current limiting strategy can maintain voltage-angle-forming functionality as required by grid codes and also comes with fast current-magnitude-forming functionality in limiting overcurrent, able to fully utilize the maximum overcurrent capability, adaptable to different disturbances, simple to implement, easy to tune, conductive to stability analysis, and robust in stability performance. Existing current limiting techniques either cannot satisfy all of these relevant requirements or need complicated engineering solutions and high costs to address these requirements.

In embodiments, the method comprises, at least while the fault condition is present, a virtual admittance $1/\underline{z}_v$, used in the voltage controller to generate the current reference $\hat{\underline{i}}$ based on the inputs $\hat{\underline{v}}_{rep}$ and $\underline{v}_{rep}$.

A virtual admittance, i.e., $1/\underline{z}_v$, as a proportional gain, is arranged to generate a current reference $\hat{\underline{i}}$ based on the inputs $\hat{\underline{v}}_{rep}$ and $\underline{v}_{rep}$. The virtual admittance can be used at all times, including under normal and faulty operating conditions regardless of whether the current is saturated or not, or it can be activated when overcurrent occurs and disabled when the overcurrent state exits.

In embodiments, the method comprises, at least while the fault condition is present,

- the controller determining a degree of saturation $\mu$, the degree of saturation $\mu$ having a value of one when the current limiter is not in an overcurrent state, and a value that decreases progressively the more the current reference value $\hat{\underline{i}}$, exceeds an overcurrent threshold $I_{lim}$; and

- the voltage controller scaling the actual voltage value $\underline{v}$ by dividing the actual voltage value $\underline{v}$ by the degree of saturation $\mu$.

This is equivalent to determining a quantity of saturation that has a value of one when the current limiter is not in overcurrent state, and a value that increases progressively the more the current reference value $\hat{\underline{i}}$, exceeds an overcurrent threshold $I_{\text{lim}}$; and the voltage controller scaling the actual voltage value $\underline{v}$ by multiplying the actual voltage value $\underline{v}$ by the quantity of saturation.

The voltage controller scaling the actual voltage value $\underline{v}$ means that it modifies the voltage value before or while processing it. Regardless of where this modification takes place in the structure of the controller, the result is mathematically equivalent to the result obtained by replacing the voltage input to the voltage controller by the modified voltage.

In embodiments, the method comprises the voltage controller determining, for single-phase conditions or balanced conditions, the current reference $\hat{\underline{i}}$, as

$$\hat{\underline{i}} = \frac{1}{\underline{z}_v}\left(\kappa\hat{\underline{v}} - \underline{v}/\mu_f\right).$$

The current reference $\hat{\underline{i}}$ is determined as $\hat{\underline{i}} = \frac{1}{\underline{z}_v}\left(\kappa\hat{\underline{v}} - \underline{v}/\mu_f\right)$ under the approximate relationship $\mu_f \approx \mu = \frac{\overline{\underline{i}}}{\hat{\underline{i}}} \approx \frac{\underline{i}}{\hat{\underline{i}}}$, assuming that the filtered $\mu_f$ is approximately equal to $\mu$ and the current controller implements perfect-tracking such that $\overline{\underline{i}} \approx \underline{i}$. Based on the approximate relationship, the voltage controller along with the current limiter renders a constant virtual impedance $\underline{z}_v$ that appears in between a virtual internal voltage $\hat{\underline{v}}_{\text{vir}} = \kappa\mu_f\hat{\underline{v}}$ and the actual voltage $\underline{v}$ in an equivalent circuit. Therefore, the control objectives are fulfilled, where the phase angle of the virtual internal voltage $\hat{\underline{v}}_{\text{vir}}$ matches with the phase angle reference of the voltage reference $\hat{\underline{v}}$ and the magnitude of the virtual internal voltage $\hat{\underline{v}}_{\text{vir}}$ is adaptively changed depending on overcurrent conditions.

In embodiments, the method comprises the voltage controller determining for unbalanced conditions, a positive-sequence current reference $\hat{\underline{i}}^+$, $\hat{\underline{i}}^+ = \frac{1}{\underline{z}_v}\left(\kappa\hat{\underline{v}} - \underline{v}^+/\mu_f\right).$

For unbalanced conditions, likewise, the voltage controller and the current limiter renders a constant virtual impedance $\underline{z}_v$ that appears in between a virtual internal voltage $\hat{\underline{v}}_{\text{vir}} = \kappa\mu_f\hat{\underline{v}}$ and the actual voltage $\underline{v}^+$ in a positive-sequence equivalent circuit.

In embodiments, the method comprises, at least while the fault condition is present,

- the voltage controller determining the current reference $\hat{\underline{i}}$ based on a division of the voltage reference value $\hat{v}$ by the sum of the virtual impedance $\underline{z}_v$ and an instantaneous impedance which corresponds to the division of the actual voltage $\underline{v}$ by the converter current $\underline{i}$,
- in particular by the voltage controller determining, for single-phase conditions or balanced conditions, the current reference $\hat{\underline{i}}$, as $\hat{\underline{i}} = \kappa \dfrac{\hat{\underline{v}}}{\frac{\underline{v}}{\underline{i}}+\underline{z}_v}$, and for unbalanced conditions, the current reference $\hat{\underline{i}}^+$, as $\hat{\underline{i}}^+ = \kappa \dfrac{\hat{\underline{v}}}{\frac{\underline{v}^+}{\underline{i}^+}+\underline{z}_v}$.

Under the approximate relationship $\mu_f \approx \mu = \frac{\overline{\underline{i}}}{\hat{\underline{i}}} \approx \frac{\underline{i}}{\hat{\underline{i}}} = \frac{\underline{i}^+}{\hat{\underline{i}}^+}$, the voltage controller along with the current limiter also renders a constant virtual impedance $\underline{z}_v$ that appears in between a virtual internal voltage $\hat{\underline{v}}_{\text{vir}} = \kappa\mu_f\hat{\underline{v}}$ and the actual voltage $\underline{v}$ or $\underline{v}^+$ in an equivalent circuit or in the positive-sequence equivalent circuit, respectively.

Moreover, this is equivalent to the controller matching the angle of the complex power at the virtual internal voltage $\hat{\underline{v}}_{\text{vir}}$ with the angle of the sum of a complex power at the actual voltage $\underline{v}$ (or $\underline{v}^+$) and the complex power loss on the virtual impedance $\underline{z}_v$.

In embodiments, the method comprises, at least while the fault condition is present,

- the controller determining the maximum phase current magnitude;
- the voltage controller determining an adaptive voltage magnitude reference $\hat{v}_{\text{vir}}$ by enforcing the maximum phase current magnitude at the threshold $I_{\text{lim}}$;
- the voltage controller determining a virtual internal voltage as $\hat{v}_{\text{vir}}e^{j\angle\hat{\underline{v}}}$ by by taking the phase angle of the voltage reference $\angle\hat{\underline{v}}$ and the adaptive voltage magnitude reference $\hat{v}_{\text{vir}}$.

By directly utilizing $\angle\hat{\underline{v}}$ as the phase angle of the virtual internal voltage $\hat{\underline{v}}_{\text{vir}} = \hat{v}_{\text{vir}}e^{j\angle\hat{\underline{v}}}$, the phase angle of the virtual

internal voltage $\hat{\underline{v}}_{vir}$ matches with the phase angle reference of the voltage reference $\underline{\hat{v}}$, , i.e., the voltage-angle-matching objective is fulfilled. Moreover, the voltage magnitude $\hat{v}_{vir}$ is determined by enforcing the overcurrent at the threshold $I_{lim}$, thus making the virtual internal voltage magnitude $\hat{v}_{vir}$ adaptively change depending on overcurrent conditions.

In embodiments, the method comprises the voltage controller determining for single-phase conditions or balanced conditions, the current reference $\underline{\hat{\imath}}$, as $\underline{\hat{\imath}} = \frac{1}{\underline{z}_v}\left(\hat{v}_{vir}e^{j\angle\hat{v}} - \underline{v}\right)$ with an adaptive voltage magnitude reference $\hat{v}_{vir}$ determined by $\hat{v}_{vir} = v^{\star} + C(s)(I_{lim} - |\underline{\hat{\imath}}|)$ based on a current-enforcing controller $C(s)$ or by $\hat{v}_{vir} = v^* + C(s)(I_{lim} - |i|)$.

A virtual admittance, i.e., $1/\underline{z}_v$, is utilized to generate a current reference $\underline{\hat{\imath}}$. This, as a result, renders a virtual impedance $\underline{z}_v$ that appears in between the virtual internal voltage $\underline{\hat{v}}_{vir} = \hat{v}_{vir}e^{j\angle\hat{v}}$ and the actual voltage $\underline{v}$ in an equivalent circuit. In a steady state, the current reference $\underline{\hat{\imath}}$ has a magnitude at the threshold $I_{lim}$, i.e., at the boundary of the current limiter. The current limiter acts to limit fast overcurrent transients before the internal voltage magnitude $\hat{v}_{vir}$ responds (relatively slowly than the inner current control) to limit the overcurrent.

In embodiments, the method comprises the voltage controller determining for unbalanced conditions, a positive-sequence current reference $\underline{\hat{\imath}}^+$, as $\underline{\hat{\imath}}^+ = \frac{1}{\underline{z}_v}\left(\hat{v}_{vir}e^{j\angle\hat{v}} - \underline{v}^+\right)$, with an adaptive voltage reference $\hat{v}_{vir}$ determined by $\hat{v}_{vir} = v^* + C(s)(I_{lim} - \max\{\hat{I}_{amag}, \hat{I}_{bmag}, \hat{I}_{cmag}\})$ based on a current-enforcing controller $C(s)$ or by $\hat{v}_{vir} = v^* + C(s)(I_{lim} - \max\{I_{amag}, I_{bmag}, I_{cmag}\})$ with measured phase current magnitudes $\{I_{amag}, I_{bmag}, I_{cmag}\}$.

Under unbalanced conditions, the maximum phase current magnitude is utilized as the feedback so that the maximum phase current is limited at the threshold $I_{lim}$. For the current feedback, it is possible to either utilize the maximum of the phase current reference $\max\{\hat{I}_{amag}, \hat{I}_{bmag}, \hat{I}_{cmag}\}$ or employ the maximum of the phase current $\max\{I_{amag}, I_{bmag}, I_{cmag}\}$, where the calculation/identification of the phase current magnitude is different. For the former, the phase current reference magnitude can be directly calculated with the positive- and negative-sequence current reference components. For the latter, however, the phase current magnitude is typically identified by measuring phase currents and using a magnitude-detecting algorithm. In the case of using the measured current, $\max\{I_{amag}, I_{bmag}, I_{cmag}\}$, as the feedback, the current limiter should be omitted. Otherwise, the measured current will track the limited current reference and thus would not reflect an overcurrent condition.

The negative-sequence current reference is determined by the controller, which allows various available modes: balanced current mode, active power oscillation suppression mode, reactive power oscillation mode, negative-sequence voltage mitigation mode, etc. Since the positive-sequence current reference is directly governed by the grid forming control, the determination of the positive-sequence current reference typically has higher priority than that of the negative-sequence current reference.

In embodiments, the method comprises a current-magnitude enforcing controller $C(s)$ as proportional-integral-derivative regulator, $\kappa_p + \kappa_i/s + \kappa_d s$.

A proportional-integral-derivative (PID) regulator is typically used to track a given reference value. However, it is also possible to utilize more advanced controllers such as predictive controls.

In embodiments, a fault condition is present when at least one of the following is the case:

- the actual voltage value $\underline{v}$ is outside a normal operating range;

- the current reference value $\underline{\hat{\imath}}$ exceeds an overcurrent threshold $I_{lim}$, in particular wherein the current reference value $\underline{\hat{\imath}}$ exceeds the overcurrent threshold $I_{lim}$ if $|\underline{\hat{\imath}}| > I_{lim}$.

In other words, when a fault condition is present, the power grid is in a fault state. When the actual voltage is again within the normal operating range and the current reference value is below the overcurrent threshold, a fault recovery is detected. In particular the length or magnitude of the vector representing the current reference value is compared to the threshold.

The actual voltage value $\underline{v}$ being outside a normal operating range means that it either is lower than a lower bound of the operating range, or higher than an upper bound of the operating range. For example, the normal operating range of the actual voltage is between 90% and 110% of a nominal value of the actual voltage value $\underline{v}$ or converter terminal voltage.

The overcurrent state of the current limiter can also be called a saturated state or a limiting state or an active state.

In embodiments, the method comprises the current limiter determining the limited current reference as:

- 

$$\underline{\bar{\imath}} = \underline{\hat{\imath}} \ \text{if} \ \left|\underline{\hat{\imath}}\right| \leq I_{\text{lim}};$$

and

- 

$$\underline{\bar{\imath}} = \mu\underline{\hat{\imath}} \ \text{if} \ \left|\underline{\hat{\imath}}\right| > I_{\text{lim}}.$$

When the current reference exceeds the threshold $I_{\text{lim}}$, the current limiter saturates the magnitude of the current reference at the threshold. The determination of the degree of saturation $\mu$ is different for balanced and unbalanced conditions. For balanced or unbalanced conditions, the current limiter is known as a circular limiter or an elliptical limiter in $\alpha\beta$ coordinates, respectively.

In embodiments, the controller determines the degree of saturation $\mu$ as, for single-phase conditions or three-phase balanced conditions, $\mu = I_{\text{lim}} / \left|\underline{\hat{\imath}}\right|$.

The determination of $\mu$ under single-phase or balanced conditions is the ratio between $I_{\text{lim}}$ and the magnitude of the current reference. When the magnitude of the current reference does not reach $I_{\text{lim}}$, i.e., the current limiter is not activated, $\mu = 1$ can be taken by default.

In embodiments, the method comprises the controller determining the degree of saturation $\mu$ as, for unbalanced conditions,

$$\mu = I_{\text{lim}} / \max\{\hat{I}_{\text{amag}}, \hat{I}_{\text{bmag}}, \hat{I}_{\text{cmag}}\},$$

where $\hat{I}_{x\text{mag}} = \left[\left\|\underline{\hat{\imath}}^{+}\right\|^{2} + \left\|\underline{\hat{\imath}}^{-}\right\|^{2} + 2\,\text{Re}(\underline{\hat{\imath}}^{+}\underline{\hat{\imath}}^{-}e^{j2\lambda_x})\right]^{1/2}$,

with $x \in \{a, b, c\}$, and $\lambda_x \in \{0, -120°, 120°\}$, respectively, and with a positive-sequence current reference $\underline{\hat{\imath}}^{+}$ determined by the grid forming controller and with $\underline{\hat{\imath}}^{-}$ being a negative-sequence current reference.

In the determination of $\mu$ for unbalanced conditions, the maximum phase current reference is used. The magnitude of the current reference each phase, $\hat{I}_{x\text{mag}}$, can be calculated with the positive-sequence current reference $\underline{\hat{\imath}}^{+}$ and a negative-sequence current reference $\underline{\hat{\imath}}^{-}$. Such a negative-sequence current reference can be determined by one of many publicly available control modes. Likewise, when the current reference does not reach $I_{\text{lim}}$, $\mu = 1$ can be taken by default.

The controller is for a grid forming **converter,** the converter being arranged to provide a single-phase or multiphase **converter current** at a single-phase or multiphase **converter terminal voltage,** the controller comprising

- a grid forming controller arranged to determine, from a converter current value $i_{\text{o}}$, a voltage reference value $\hat{v}$;
- a voltage controller arranged to determine, from the voltage reference value $\hat{v}$ and from an actual voltage value $\underline{v}$ representing the converter terminal voltage, a current reference value $\underline{\hat{\imath}}$;
- a current limiter, being a circular or elliptical current limiter, arranged to determine, from the current reference value $\underline{\hat{\imath}}$, a limited current reference value $\bar{\imath}$;
- a current controller arranged to control the converter to provide the converter current $\underline{i}$ prescribed by the limited current reference value $\bar{\imath}$.

Therein,
the controller is configured for, at least while the fault condition is present, the voltage controller to generate a current

reference $\hat{\underline{i}}$ based on a relationship between a representative $\hat{\underline{v}}_{rep}$ of a virtual internal voltage $\hat{\underline{v}}_{vir}$ and a representative of $\underline{v}_{rep}$ of an actual voltage value $\underline{v}$, the phase angle of the virtual internal voltage $\hat{\underline{v}}_{vir}$ is controlled to match with the phase angle reference of the voltage reference $\hat{\underline{v}}$ and the magnitude of the virtual internal voltage $\hat{\underline{v}}_{vir}$ is adaptively changed depending on overcurrent conditions.

The controller can be implemented by analog or digital processing means, or by a combination thereof. The controller is typically implemented by a data processing device programmed to perform the method described herein.

The inventive method can be implemented as a method of operating a data-processing system. The invention can also be embodied in one or more of the following forms:

- A data-processing apparatus or system comprising means for carrying out said method. Typically, the data-processing apparatus or system is programmed to carry out said method.
- A computer program, or computer program product, adapted to perform said method. A computer program, typically comprising software code, adapted to perform said method. The computer program typically is loadable into an internal memory of a data processing system or apparatus, and comprises computer-executable instructions to cause one or more processors of the data processing system or apparatus to execute said method.
- The computer program can be carried on an electric carrier signal. In other words, the computer program is embodied as a reproducible computer-readable signal, and thus can be transmitted in the form of such a signal.
- A computer-readable storage medium or data carrier comprising said program. The computer readable medium is non-transitory; that is, tangible.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, which schematically show:

Figure 1        a power grid;
Figure 2a       simulation of a grid fault leading to an overcurrent situation with a prior art grid-forming converter without a current limiter;
Figure 2b       simulation of a grid fault leading to an instability situation with a prior art grid-forming converter embedding a current limiter;
Figure 3a-c     block diagrams of cross-forming current limiting strategies;
Figure 4a       an equivalent circuit resulting from applying the cross-forming current limiting strategy
Figure 4b       an equivalent circuit resulting from applying two types of conventional current limiting strategies with the grid-forming converter;
Figure 5        a hysteresis comparator for enabling/disabling the cross-forming current limiting strategy;
Figure 6a       operation of a current limiter in balanced conditions;
Figure 6b       operation of a current limiter in unbalanced conditions;
Figure 7        a flow diagram of the converter's operation;
Figure 8a       simulation validation results for the proposed cross-forming control strategy under a balanced fault condition;
Figure 8b       simulation validation results for the proposed cross-forming control strategy under an unbalanced fault condition.

In principle, identical or functionally identical parts are provided with the same reference symbols in the figures.

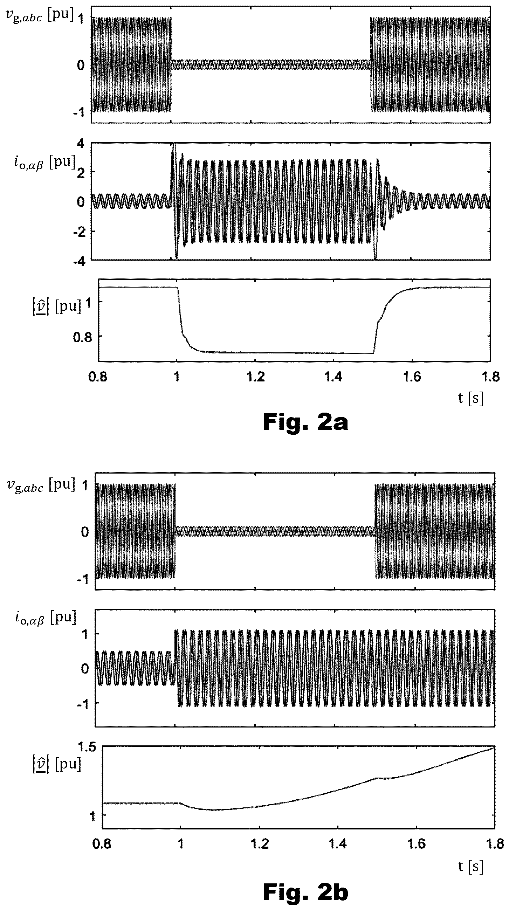

**Fig. 1** schematically shows the structure of a power grid, as presented in the introduction. A number of the elements exchanging power with the grid do so using power electronic converters. These converters need to preserve their voltage-forming functionality (particularly angle- or frequency-forming characteristics) to naturally provide fault reactive current under grid voltage dips, active phase jump power under grid phase jumps or frequency drifts, instead of switching to a conventional grid-following control structure, temporarily blocking current output, or even disconnecting from the grid. Specific examples of performance under a grid voltage dip are shown in **Fig. 2a** and **Fig. 2b**. The trajectories shown are a three-phase grid voltage $v_{g,abc}$ in per-unit, a three-phase converter output current $i_{o,\alpha\beta}$ (transferred to the $\alpha\beta$ coordinate frame) in per-unit, and a grid forming voltage magnitude reference $\hat{v}$ generated by the converter.

**Fig. 2a** shows an example of a grid-forming converter suffering from overcurrent if no current limiting strategy is applied, however it maintains stability. **Fig. 2b** shows an example of transient instability of a converter losing its voltage-forming functionality, e.g., if a current limiter, also known as current saturation algorithm, is directly applied without considering the impact of its saturation.

A single-phase or three-phase grid-forming converter 32 connected to a power network or grid 30, and a controller 31 implementing the invention are depicted in **Fig. 3a-c.** The converter 32 comprises power electronic switches generating the single-phase or three-phase modulation voltage $\underline{e}$, and a filter network arranged between the power electronic switches and the grid 30. The filter network is represented here by filter inductances $l_f$ and filter capacitances $c_f$. The voltage and current variables in **Fig. 3a-c** denote complex vectors, denoted as $\underline{x} = x_\alpha + jx_\beta$ with $\alpha$- and $\beta$-axis coordinates (or with d- and q-axis coordinates after the Park transformation), where $x$ can be a voltage or current variable, $\underline{x}$ with an underline indicates complex-valued variables, and in the single-phase case, $x_\beta$ can be obtained from $x_\alpha$ by quadrature signal generation, while in the three-phase case, $x_\alpha$ and $x_\beta$ are obtained from three-phase variables by the Clarke transformation. The controller comprises the following elements:

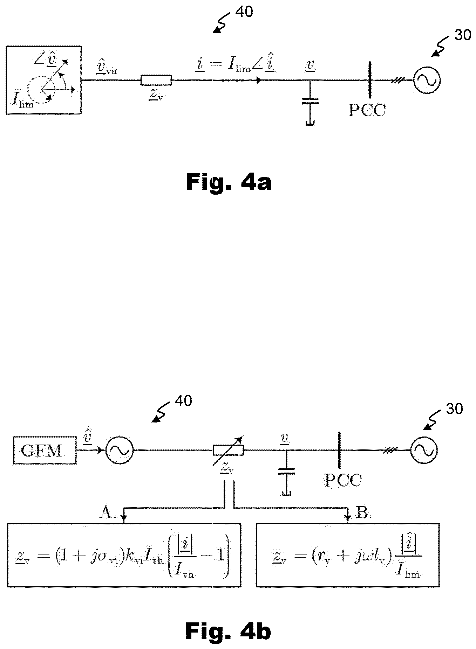

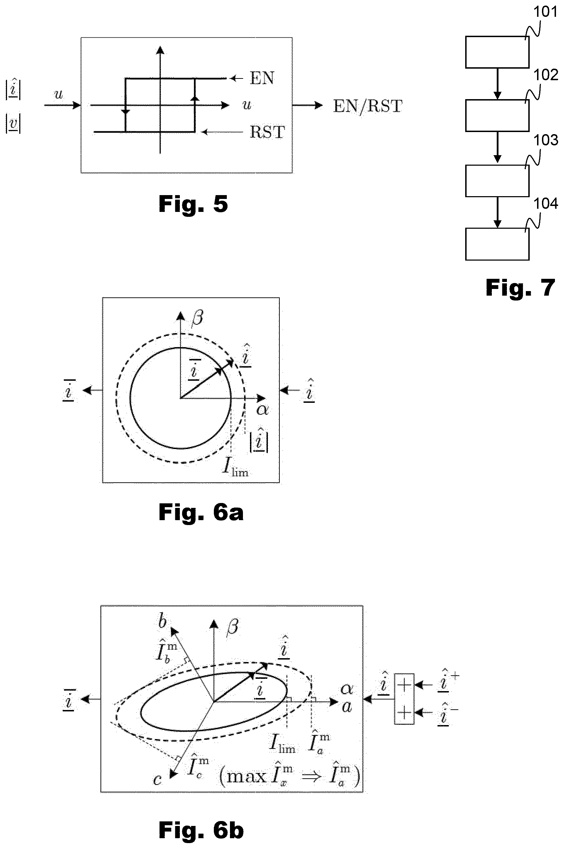

- A grid-forming (also known as voltage-forming) controller 33 arranged to determine, from a **converter current value** $\underline{i}_o$, a **voltage reference value** $\underline{\hat{v}}$. Such grid forming controllers are known from the prior art. See diagram step 101 in **Fig. 7.**
- A voltage controller 34 arranged to determine, from the voltage reference value $\underline{\hat{v}}$ and from an **actual voltage value** $\underline{v}$ representing the converter terminal voltage, a **current reference value** $\underline{\hat{i}}$. See diagram step 102 in **Fig. 7.** Typically, the voltage controller comprises a virtual admittance $1/\underline{z}_v$ as a (complex-gain) proportional controller. The dotted boxes in **Fig. 3a-c** in each case show an embodiment of an internal structure of the respective controller. The voltage controller 34 uses a virtual admittance $1/\underline{z}_v$ to generate a current reference value $\underline{\hat{i}}$ (or generate a positive-sequence current reference value $\underline{\hat{i}}^+$ for unbalanced conditions) based on a relationship between a respective $\underline{v}_{rep}$ of a virtual internal voltage $\underline{\hat{v}}_{vir}$ and a representative of $\underline{v}_{rep}$ of an actual voltage value $\underline{v}$ (or and a positive-sequence representative $\underline{v}_{rep}^+$ of an actual positive-sequence positive voltage $\underline{v}^+$ for unbalanced conditions). Depending on a particular implementation, the representative $\underline{\hat{v}}_{rep}$ of the virtual internal voltage can be the virtual internal voltage $\underline{\hat{v}}_{vir}$ itself or a scalar multiple of the virtual internal voltage $\underline{\hat{v}}_{vir}$, and the representative $\underline{v}_{rep}$ of the actual voltage can be the actual voltage $\underline{v}$ itself or a scalar multiple of the actual voltage $\underline{v}$. Corresponding to the voltage control 34, the equivalent circuit in **Fig. 4a** has an equivalent virtual internal voltage $\underline{\hat{v}}_{vir}$ and an equivalent virtual impedance $\underline{z}_v$. Since the equivalent virtual internal voltage $\underline{\hat{v}}_{vir}$ or its representative $\underline{\hat{v}}_{rep}$ is controlled in the voltage controller 34 to match with the phase angle reference of the voltage reference $\underline{\hat{v}}$, angle-forming functionality is maintained in the equivalent circuit. Moreover, since the magnitude of the equivalent virtual internal voltage $\underline{\hat{v}}_{vir}$ is adaptively changed depending on overcurrent conditions, the current limiting functionality is maintained.
- A current limiter 35, being a circular or elliptical current limiter, arranged to determine, from the current reference value $\underline{\hat{i}}$, a **limited current reference value** $\underline{\bar{i}}$. See diagram step 103 in **Fig. 7.**
- A current controller 36 arranged to control the converter 32 to provide the converter current $i$ prescribed by the **limited current reference value** $\underline{\bar{i}}$. See diagram step 104 in **Fig. 7.** Typically, since the current controller 36 acts very fast and can perfectly track the given reference, it can be assumed that the dynamics of the combination of the LC filter in the converter 32 with the current controller 36 can be neglected from the point of view of the higher-level controllers, that is, the voltage controller 34 and the grid forming controller 33.

**Fig. 3a** shows an embodiment with, at least while the fault condition is present,

- the voltage controller 34 determining, for single-phase conditions or balanced conditions, the current reference $\underline{\hat{i}}$, as

$$\underline{\hat{i}} = \frac{1}{\underline{z}_v}\left(\kappa\underline{\hat{v}} - \underline{v}/\mu_f\right)$$
;

- the voltage controller 34 determining, for unbalanced conditions, the current reference $\underline{\hat{i}}^+$, as

$$\text{as } \underline{\hat{i}}^+ = \frac{1}{\underline{z}_v}\left(\kappa\underline{\hat{v}} - \underline{v}^+/\mu_f\right)$$
; and

- the relationship among the virtual internal voltage $\underline{\hat{v}}_{vir}$, its representative $\underline{\hat{v}}_{rep}$, and the voltage reference $\underline{\hat{v}}$ obtained as:

$\underline{\hat{v}}_{vir} = \kappa\mu_f\underline{\hat{v}}$ and $\underline{\hat{v}}_{rep} = \kappa\underline{\hat{v}}$, and the relationship between the actual voltage $\underline{v}^+$ and its representative $\underline{v}_{rep}^+$ as

$$\underline{v}_{\mathrm{rep}}^{+} = \underline{v}^{+}/\mu_{\mathrm{f}}$$

.

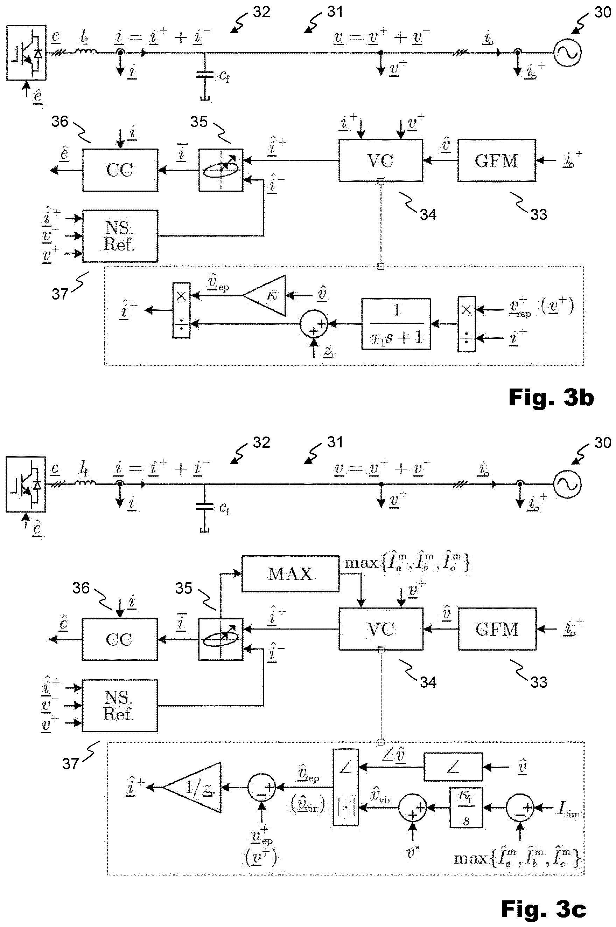

**Fig. 3b** shows an embodiment with, at least while the fault condition is present,

- the voltage controller 34 determining, for single-phase conditions or balanced conditions, the current reference $\underline{\hat{\imath}}$, as

$$\underline{\hat{\imath}} = \kappa \frac{\hat{v}}{\frac{\overline{v}}{\underline{\imath}} + \underline{z}_{\mathrm{v}}};$$

- the voltage controller 34 determining, for unbalanced conditions, the current reference $\underline{\hat{\imath}}^{+}$, as $$\hat{\imath}^{+} = \kappa \frac{\hat{v}}{\frac{\overline{v^{+}}}{\underline{\imath}^{+}} + \underline{z}_{\mathrm{v}}}$$ ; and

- the relationship among the virtual internal voltage $\underline{\hat{v}}_{\mathrm{vir}}$, its representative $\underline{\hat{v}}_{\mathrm{rep}}$, and the voltage reference $\underline{\hat{v}}$ obtained as:

  $\underline{\hat{v}}_{\mathrm{vir}} = \kappa\mu_{\mathrm{f}}\underline{\hat{v}}$ and $\underline{\hat{v}}_{\mathrm{rep}} = \kappa\underline{\hat{v}}$, and the relationship between the actual voltage $\underline{v}^{+}$ and its representative $\underline{v}_{\mathrm{rep}}^{+}$ as

$$\underline{v}_{\mathrm{rep}}^{+} = \underline{v}^{+}$$

.

**Fig. 3c** shows an embodiment with, at least while the fault condition is present,

- the controller 31 determining the maximum phase current magnitude;
- the voltage controller 34 determining an adaptive voltage magnitude reference $\hat{v}_{\mathrm{vir}}$ by enforcing the maximum phase current magnitude at the threshold $I_{\mathrm{lim}}$;
- the voltage controller 34 determining a virtual internal voltage as $\hat{v}_{\mathrm{vir}}e^{j\angle\hat{v}}$ by taking the phase angle of the voltage reference $\angle\hat{v}$ and the adaptive voltage magnitude reference $\hat{v}_{\mathrm{vir}}$; and
- the relationship between the virtual internal voltage $\underline{\hat{v}}_{\mathrm{vir}}$ and its representative $\underline{\hat{v}}_{\mathrm{rep}}$ as: $\underline{\hat{v}}_{\mathrm{vir}} = \underline{\hat{v}}_{\mathrm{rep}}$, and the relationship

  between the actual voltage $\underline{v}^{+}$ and its representative $\underline{v}_{\mathrm{rep}}^{+}$ as $\underline{v}_{\mathrm{rep}}^{+} = \underline{v}^{+}$ .

**Fig. 7** shows a flow diagram with diagram steps performed by the above elements.

The inventive control strategy is based on a combination of the current limiter with the commonly known other controllers, and on a modification of these other controllers. When the inventive control strategy is applied during current saturation, the behaviour of the combined converter and controller can be represented by a fixed and known equivalent circuit, as shown in **Fig. 4a.** Therein, the output current is limited as $\underline{i} \approx \overline{\underline{i}}$ while the angle-forming functionality is preserved by an equivalent internal virtual voltage source $\underline{\hat{v}}_{\mathrm{vir}}$ with the same voltage angle as the grid-forming voltage reference $\hat{v}$ but an adaptive voltage magnitude, therefore effectively addressing the current-magnitude-limiting and voltage-angle-forming control objectives. By comparison, the conventional current limiting strategies, typically including A) the threshold virtual impedance control and B) the current limiter with virtual admittance control, yield a current-dependent equivalent virtual impedance, as shown in **Fig. 4b,** where the internal virtual voltage is determined directly by the grid-forming voltage reference.

The control method, considering the one shown in **Fig. 3a** as an example, comprises the following steps. They are performed during a fault condition, which is the case when the current reference value $\underline{\hat{\imath}}$ exceeds an overcurrent threshold $I_{\mathrm{lim}}$ and/or when the actual voltage value $\underline{v}$, which is equal to the grid voltage seen at the output of the converter 32, is outside its normal operating range.

*Step 1:* Enable the virtual-admittance proportional controller during current saturation to avoid controller windup.

This step is straightforward: considering the current reference $\underline{\hat{\imath}}$ or the converter terminal voltage $\underline{v}$ as the input signal, then, when $\underline{\hat{\imath}}$ represents an overcurrent and/or when $\underline{v}$ is beyond the normal operating range, then the virtual-admittance proportional controller is enabled. When the overcurrent exits and the terminal voltage recovers, the virtual admittance controller is disabled. Alternatively, it is also possible to enable the virtual admittance controller at all times, regardless of whether the current is saturated or not.

*Step 2:* Apply a current limiter to limit the inner-loop current reference and calculate a degree of saturation (DoS).

The DoS signal can be calculated with the current reference $\hat{\underline{\imath}}$ and the overcurrent threshold $I_{\mathrm{lim}}$. For single-phase conditions or three-phase balanced conditions, it is calculated by $\mu = I_{\mathrm{lim}} / \left| \hat{\underline{\imath}} \right|$; for unbalanced conditions, it is calculated by $\mu = I_{\mathrm{lim}}/\max\{\hat{I}_{\mathrm{amag}}, \hat{I}_{\mathrm{bmag}}, \hat{I}_{\mathrm{cmag}}\}$, where $\hat{I}_{x\mathrm{mag}} = \left[ \left\| \hat{\underline{\imath}}^{+} \right\|^{2} + \left\| \hat{\underline{\imath}}^{-} \right\|^{2} + 2\,\mathrm{Re}(\hat{\underline{\imath}}^{+}\hat{\underline{\imath}}^{-} e^{j2\lambda_x}) \right]^{1/2}$, with $x \in \{a, b, c\}$, and $\lambda_x \in \{0, -120°, 120°\}$, respectively. Both the positive-sequence reference $\hat{\underline{\imath}}^{+}$ and the negative-sequence reference $\hat{\underline{\imath}}^{-}$ can be specified under unbalanced conditions. The positive-sequence current reference is provided by the voltage controller, while the negative-sequence current reference can be specified by many existing options depending on device requirements and/or grid code requirements. For instance, Tianwen Zheng, Laijun Chen, Yan Guo, and Shengwei Mei. "Comprehensive control strategy of virtual synchronous generator under unbalanced voltage conditions." IET Generation, Transmission & Distribution, 12.7 (2018): 1621-1630 shows how the negative sequence current reference is determined. The negative sequence current reference can also be set to zero. The entire current reference is given as $\hat{\underline{\imath}} = \hat{\underline{\imath}}^{+} + \hat{\underline{\imath}}^{-}$. The limited current reference by the current limiter as in **Fig. 3a-c** is then given by:

- 

$$\bar{\underline{\imath}} = \hat{\underline{\imath}} \ \text{ if } \ \left| \hat{\underline{\imath}} \right| \leq I_{\mathrm{lim}} \text{ (current unsaturated);}$$

and

- 

$$\bar{\underline{\imath}} = \mu\hat{\underline{\imath}} \ \text{ if } \ \left| \hat{\underline{\imath}} \right| > I_{\mathrm{lim}} \text{ (current saturated).}$$

*Step 3:* Feed the DoS signal back to the virtual-admittance proportional voltage controller to generate a fixed and known equivalent circuit with a virtual internal voltage source node.

The voltage feedback signal of the virtual-admittance proportional voltage controller is the terminal voltage positive-sequence component $\underline{v}^{+}$ (or $\underline{v}$ for single-phase or balanced conditions). A scaled voltage signal, i.e., $\underline{v}^{+}/\mu_{\mathrm{f}}$, is used as the feedback signal for the proportional voltage controller, where $\mu_{\mathrm{f}}$ is a filtered/delayed DoS signal as in **Fig. 3a** to avoid the appearance of an algebraic loop. Then, the voltage controller generates the positive-sequence current reference $\hat{\underline{\imath}}^{+}$, e.g., $\hat{\underline{\imath}}^{+} = \dfrac{1}{\underline{z}_{\mathrm{v}}}\left(\kappa\underline{\hat{v}} - \underline{v}^{+}/\mu_{\mathrm{f}}\right)$, where the voltage reference signal $\underline{\hat{v}}$ is provided by the grid-forming control.

When the fault recovery is detected, the feedback of the DoS signal can be disabled.

Moreover, it may be necessary incorporate filters in the voltage feedback to make the voltage controller relatively slower than the current controller and to improve the small-signal stability of the virtual admittance control, especially when using a high X/R ratio in the virtual impedance $\underline{z}_{\mathrm{v}}$.

*Step 4:* Scale up the power or current feedback of the grid-forming control to enhance the angle-forming functionality of the grid-forming control.

For grid-forming controls employing different coordinates, corresponding feedback modifications can be implemented in the following specific way.

- For a grid-forming controller that associates the active power $p$ and reactive power $q$ feedback to the phase angle and voltage magnitude reference in polar coordinates (i.e., the phase angle $\hat{\theta}$ and magnitude $\hat{v}$ of $\underline{\hat{v}}$), the active power feedback $p$ can be scaled up. For example, the calculation of the active power feedback can use the actual output current $\underline{i}_{\mathrm{o}}$ and the voltage reference $\hat{v}e^{j\hat{\theta}}$, where $\hat{v}$ can take a constant value.

- For a grid-forming controller that associates the grid-side output current $\underline{i}_{\mathrm{o}}^{+}$ to the voltage reference $\underline{\hat{v}}$ in $\alpha\beta$

rectangular coordinates (or the associated complex vector coordinates), the current feedback $\underline{i}_o^+$ can be scaled up. For example, the current feedback can be scaled by the inverse of the DoS signal and the inverse of the voltage control gain, i.e., $\underline{i}_o^+/(\kappa\mu_f)$.

The principle underlying Step 4 is to scale up the power or current feedback through any general way. In doing so, the stability margin of the grid-forming control will be generally improved to some extent. Specifically, for example, if the specified ways in the above two bullet points are implemented, one can mathematically transform the closed-loop grid-forming control under current saturation to an equivalent normal/canonical form. This facilitates the analysis and/or guarantees of stability.

One may distinguish grid-forming controls implemented in polar coordinates and in $\alpha\beta$ coordinates as above because the specific scaling methods are different. For the former, one can use the voltage reference (instead of the actual voltage) in calculating the power feedback. Additionally, the voltage magnitude reference is preferably a constant. For the latter, the DoS signal can be used to scale up the current feedback. In addition to the specific ways shown here, there are alternative ways to scale up the power/current feedback.

In each case, the feedback of the DoS signal can be disabled when the fault recovery is detected.

*Step 5:* Reduce the active power from the back-end (primary source-side) converter to physically respect the power transfer limit of the transmission line during grid faults. For grid-forming converters that connect renewable energy generation such as wind or photovoltaic, the active power setpoint or the DC current setpoint of the back-end converter should be reduced. This can be achieved by scaling down the setpoint. The active power setpoint or the DC current setpoint is reverted when the fault recovery is detected.

For example, in the converter 32, the power electronic switches generating the grid forming voltage $\underline{e}$, can be supplied with a DC voltage by a back-end controller. In this case, an active power reference or a DC current reference in a controller of the back-end converter, denoted as $x^*$, can be scaled down by the DoS signal to obtain a new reference as $\bar{x}^* = \mu_f x^*$. If the DC bus is equipped with fixed voltage sources such as energy storage systems or other auxiliary equipment such as DC chopper circuits that can absorb surplus power during grid faults, this step can be skipped.

Using a virtual admittance control during current saturation in Step 1 allows to limit the current, and to preserve the voltage-forming functionality at least in part, even without applying Steps 2-5. However, introducing the feedback of the DoS signal to the proportional voltage controller in Step 3 allows to obtain a fixed and known equivalent circuit to facilitate stability analysis and robustness in stability performance. Specifically, the controller $\hat{\underline{i}}^+ = \frac{1}{\underline{z}_v}\left(\kappa\hat{\underline{v}} - \underline{v}^+/\mu_f\right)$ in Step 3 is equivalent to $\kappa\mu_f\hat{\underline{v}} - \underline{v}^+ = \underline{z}_v\mu_f\hat{\underline{i}}^+ \approx \underline{z}_v\underline{i}^+$, which represents an equivalent virtual internal voltage source $\kappa\mu_f\hat{\underline{v}}$ connected to the terminal voltage $\hat{\underline{v}}$ through an equivalent virtual impedance $\underline{z}_v$, see the equivalent circuit in **Fig. 4a,** where the virtual internal voltage proves to be $\hat{\underline{v}}_{vir} = \kappa\mu_f\hat{\underline{v}}$. To enhance the angle-forming functionality in an equivalent normal form and extensively improve the stability of the grid-forming control, Steps 4 and 5 can be optionally applied.

The following variations of the embodiments presented can be implemented:
In embodiments, to avoid maloperation and ensure reliability, a boolean logic signal, which is used to enable the virtual admittance control in Step 1, enable/disable the feedback of DoS in Step 3 and 4, and reduce/recover the active power in Step 5, can be generated by more operations, with multiple input signals such as the current reference, the terminal voltage, the DoS signal, or even provided via communication from an upper-level energy management system.

In embodiments, the voltage controller, the current limiter, and the current controller are implemented in either a stationary reference frame with $\alpha\beta$ coordinates, or in a rotating reference frame with dq coordinates.

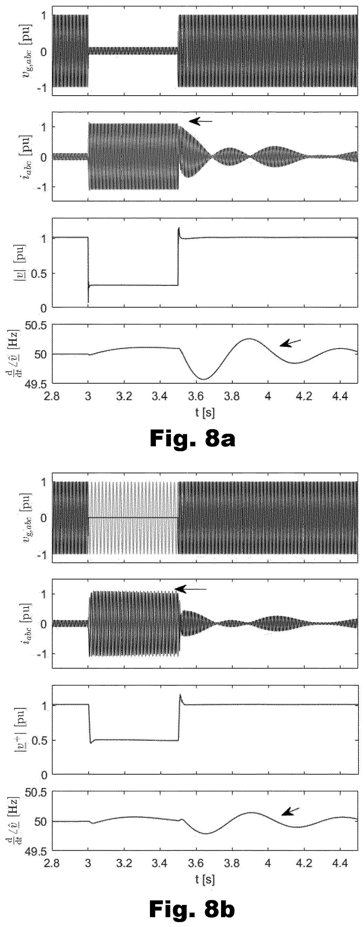

The simulation validation of the invention is shown in the following. In **Fig. 8a,** a three-phase symmetrical grid voltage dip is simulated. When the voltage dip or the overcurrent is detected, e.g., using a hysteresis comparator as shown in **Fig. 5,** the current limiting strategy of this invention is activated. The current limiter is illustrated in **Fig. 6a** for balanced conditions. It can be seen in **Fig. 8a** (see the arrow in the subplot of $i_{abc}$) that the current is limited at 1.1 pu throughout the voltage dip. When the voltage recovery is detected and the overcurrent state exits, the controller is reset to normal mode. Since a virtual-synchronous machine is used as a grid-forming voltage reference, the frequency exhibits inertial response, i.e., a swing behavior, as indicated by the arrow in the subplot of $\frac{d}{dt}\angle\hat{\underline{v}}$ (frequency) in **Fig. 8a.**

In **Fig. 8b,** a three-phase asymmetrical grid fault (double line-to-ground fault) is simulated, where phase A voltage remains while phases B and C voltages dip to zero. During the grid fault, the positive-sequence current is still governed by the grid-forming control while the negative-sequence current is optionally specified by an active power oscillation suppression mode (it is also possible to use a reactive power oscillation suppression mode, a negative-sequence voltage mitigation mode, or simply balanced current mode). Based on the current limiter illustrated in **Fig. 6b** for unbalanced conditions, the entire current is limited by the current limiting strategy. The maximum phase current magnitude stays at the limiting value, as indicated by the arrow in the subplot of $i_{abc}$ in **Fig. 8b,** and the grid-forming converter maintains transient stability with the preserved angle-forming functionality, as indicated by the arrow in the subplot of $\frac{\mathrm{d}}{\mathrm{d}t} \angle \hat{v}$ (frequency) in **Fig. 8b.** It should be noted that during grid voltage dips, the active power setpoint should be reduced in order to guarantee transient stability, and meanwhile this allows preferentially providing fault reactive current to satisfy grid-code requirements. The reactive current provision is a natural response of the current-limited grid-forming inverter, and therefore the response time is fast enough, meeting the dynamic performance metrics required by grid codes.

While the invention has been described in present embodiments, it is distinctly understood that the invention is not limited thereto, but may be otherwise variously embodied and practised within the scope of the claims.

In particular, where mathematical relations between quantities are described by specific formulae or by rules for computing a quantity, it is understood that other formulae or rules that result in a mathematically equivalent relation are also covered by the scope of the claims.

## Claims

1. A method for controlling a grid forming **converter (32),** the converter (32) being arranged to provide a single-phase or multi-phase **converter current** at a single-phase or multi-phase **converter terminal voltage,** the method comprising the steps of:

   • a grid forming controller (33) determining (101), from a **converter current value** $\underline{i}_o$, a **voltage reference value** $\hat{\underline{v}}$;
   • a voltage controller (34) determining (102), from the voltage reference value $\hat{\underline{v}}$ and from an **actual voltage value**

   $\underline{v}$ representing the converter terminal voltage, a **current reference value** $\hat{\underline{i}}$;
   • a current limiter (35), being a circular or elliptical current limiter, determining (103), from the current reference

   value $\hat{\underline{i}}$, a **limited current reference value** $\overline{\underline{i}}$;
   • a current controller (36) controlling (104) the converter (32) to provide the converter current $\underline{i}$ prescribed by the **limited current reference value** $\overline{\underline{i}}$;
   **characterised in that,** at least while a fault condition is present, the voltage controller (34) generates a current

   reference $\hat{\underline{i}}$ based on a relationship between a representative $\hat{\underline{v}}_{rep}$ of a virtual internal voltage $\hat{\underline{v}}_{vir}$ and a representative of $\underline{v}_{rep}$ of an actual voltage value $\underline{v}$,
   the phase angle of the virtual internal voltage $\hat{\underline{v}}_{vir}$ is controlled to match with the phase angle reference of the voltage reference $\hat{\underline{v}}$ and the magnitude of the virtual internal voltage $\hat{\underline{v}}_{vir}$ is adaptively changed depending on overcurrent conditions.

2. The method of claim 1, comprising, at least while the fault condition is present, a virtual admittance $1/\underline{z}_v$, used in the

   voltage controller (34) to generate the current reference $\hat{\underline{i}}$ based on the inputs $\hat{\underline{v}}_{rep}$ and $\underline{v}_{rep}$.

3. The method of claim 1, comprising, at least while the fault condition is present,

   • the controller (31) determining a degree of saturation $\mu$, the degree of saturation $\mu$ having a value of one when the current limiter is not in an overcurrent state, and a value that decreases progressively the more the current

   reference value $\hat{\underline{i}}$, exceeds an overcurrent threshold $I_{lim}$; and
   • the voltage controller (34) scaling the actual voltage value $\underline{v}$ by dividing the actual voltage value $\underline{v}$ by the degree of saturation $\mu$.

4. The method of one of the preceding claims, with the voltage controller (34) determining, for single-phase conditions or balanced conditions, the current reference $\hat{\underline{i}}$, as $\hat{\underline{i}} = \frac{1}{\underline{z}_v}\left(\kappa\hat{\underline{v}} - \underline{v}/\mu_f\right)$.

**5.** The method of one of the preceding claims, with the voltage controller (34) determining for unbalanced conditions, a positive-sequence current reference $\hat{\underline{\imath}}^+$, as

$$\hat{\underline{\imath}}^+ = \frac{1}{\underline{z}_v}\left(\kappa\hat{\underline{v}} - \underline{v}^+/\mu_f\right).$$

**6.** The method of claim 1, comprising, at least while the fault condition is present,

    • the voltage controller (34) determining the current reference $\hat{\underline{\imath}}$ based on a division of the voltage reference value $\hat{\underline{v}}$ by the sum of the virtual impedance $\underline{z}_v$ and an instantaneous impedance which corresponds to the division of the actual voltage $\underline{v}$ by the converter current $\underline{i}$,

    • in particular by the voltage controller (34) determining, for single-phase conditions or balanced conditions, the current reference $\hat{\underline{\imath}}$, as $\hat{\underline{\imath}} = \kappa \dfrac{\hat{\underline{v}}}{\frac{\underline{v}}{\underline{\imath}}+\underline{z}_v}$, and for unbalanced conditions, the current reference $\hat{\underline{\imath}}^+$, as

$$\hat{\underline{\imath}}^+ = \kappa \frac{\hat{\underline{v}}}{\frac{\underline{v}^+}{\underline{\imath}^+}+\underline{z}_v}.$$

**7.** The method of claim 1, comprising, at least while the fault condition is present,

    • the controller (31) determining the maximum phase current magnitude;

    • the voltage controller (34) determining an adaptive voltage magnitude reference $\hat{v}_{vir}$ by enforcing the maximum phase current magnitude at the threshold $I_{lim}$;

    • the voltage controller (34) determining a virtual internal voltage as $\hat{v}_{vir}e^{j\angle\hat{\underline{v}}}$ by taking the phase angle of the voltage reference $\angle\hat{\underline{v}}$ and the adaptive voltage magnitude reference $\hat{v}_{vir}$.

**8.** The method of one of the preceding claims, with the voltage controller (34) determining for single-phase conditions or balanced conditions, the current reference $\hat{\underline{\imath}}$, as $\hat{\underline{\imath}} = \dfrac{1}{\underline{z}_v}\left(\hat{v}_{vir}e^{j\angle\hat{\underline{v}}} - \underline{v}\right)$ with an adaptive voltage magnitude reference $\hat{v}_{vir}$ determined by $\hat{v}_{vir} = v^\star + C(s)\left(I_{lim} - \left|\hat{\underline{\imath}}\right|\right)$ based on a current-enforcing controller $C(s)$ or by $\hat{v}_{vir} = v^\star + C(s)(I_{lim} - |\underline{i}|)$.

**9.** The method of one of the preceding claims, with the voltage controller (34) determining for unbalanced conditions, a positive-sequence current reference $\hat{\underline{\imath}}^+$, as $\hat{\underline{\imath}}^+ = \dfrac{1}{\underline{z}_v}\left(\hat{v}_{vir}e^{j\angle\hat{\underline{v}}} - \underline{v}^+\right)$, with an adaptive voltage reference $\hat{v}_{vir}$ determined by $\hat{v}_{vir} = v^\star + C(s)(I_{lim} - \max\{\hat{I}_{amag}, \hat{I}_{bmag}, \hat{I}_{cmag}\})$ based on a current-enforcing controller $C(s)$ or by $\hat{v}_{vir} = v^\star + C(s)(I_{lim} - \max\{\hat{I}_{amag}, I_{bmag}, I_{cmag}\})$ with measured phase current magnitudes $\{I_{amag}, I_{bmag}, I_{cmag}\}$.

**10.** The method of one of the preceding claims, with a current-magnitude enforcing controller $C(s)$ as proportional-integral-derivative regulator, $\kappa_p + \kappa_i/s + \kappa_d s$.

**11.** The method of one of the preceding claims, wherein a fault condition is present when at least one of the following is the case:

    • the actual voltage value $\underline{v}$ is outside a normal operating range;

    • the current reference value $\hat{\underline{\imath}}$ exceeds an overcurrent threshold $I_{lim}$, in particular wherein the current reference value $\hat{\underline{\imath}}$ exceeds the overcurrent threshold $I_{lim}$ if $\left|\hat{\underline{\imath}}\right| > I_{lim}$.

**12.** The method of one of the preceding claims, with the current limiter (35) determining the limited current reference as:

    •

$$\overline{\underline{\imath}} = \underline{\hat{\imath}} \ \text{ if } \ \left|\underline{\hat{\imath}}\right| \le I_{\mathrm{lim}};$$

and

·

$$\overline{\underline{\imath}} = \mu\underline{\hat{\imath}} \ \text{ if } \ \left|\underline{\hat{\imath}}\right| > I_{\mathrm{lim}}.$$

13. The method of one of the preceding claims, with the controller (31) determining the degree of saturation $\mu$ as, for single-phase conditions or three-phase balanced conditions, $\mu = I_{\mathrm{lim}}/\left|\underline{\hat{\imath}}\right|$.

14. The method of one of the preceding claims, with the controller (31) determining the degree of saturation $\mu$ as, for unbalanced conditions,

$$\mu = I_{\mathrm{lim}}/\max\!\left\{\hat{I}_{\mathrm{amag}}, \hat{I}_{\mathrm{bmag}}, \hat{I}_{\mathrm{cmag}}\right\},$$

where $\hat{I}_{x\mathrm{mag}} = \left[\left\|\underline{\hat{\imath}}^{+}\right\|^{2} + \left\|\underline{\hat{\imath}}^{-}\right\|^{2} + 2\,\mathrm{Re}(\underline{\hat{\imath}}^{+}\underline{\hat{\imath}}^{-}e^{j2\lambda_x})\right]^{1/2}$ ,

with $x \in \{a, b, c\}$, and $\lambda_x \in \{0, \text{-}120°, 120°\}$, respectively, and with a positive-sequence current reference $\underline{\hat{\imath}}^{+}$ determined by the grid forming controller (33) and with $\underline{\hat{\imath}}^{-}$ being a negative-sequence current reference.

15. **A controller** (31) for a grid forming **converter (32),** the converter (32) being arranged to provide a single-phase or multiphase **converter current** at a single-phase or multiphase **converter terminal voltage,** the controller (31) comprising

· a grid forming controller (33) arranged to determine, from a converter current value $\underline{i}_{\mathrm{o}}$, a voltage reference value $\underline{\hat{v}}$;
· a voltage controller (34) arranged to determine, from the voltage reference value $\underline{\hat{v}}$ and from an actual voltage value $\underline{v}$ representing the converter terminal voltage, a current reference value $\underline{\hat{\imath}}$;
· a current limiter (35), being a circular or elliptical current limiter, arranged to determine, from the current reference value $\underline{\hat{\imath}}$, a limited current reference value $\overline{\underline{\imath}}$;
· a current controller (36) arranged to control the converter (32) to provide the converter current $\underline{i}$ prescribed by the limited current reference value $\overline{\underline{\imath}}$.

**characterised in that,**
the controller (31) is configured for, at least while the fault condition is present, the voltage controller (34) to generate a current reference based on a relationship between a representative $\underline{\hat{v}}_{\mathrm{rep}}$ of a virtual internal voltage $\underline{\hat{v}}_{\mathrm{vir}}$ and a representative of $\underline{v}_{\mathrm{rep}}$ of an actual voltage value $\underline{v}$, the phase angle of the virtual internal voltage $\underline{\hat{v}}_{\mathrm{vir}}$ is controlled to match with the phase angle reference of the voltage reference $\underline{\hat{v}}$ and the magnitude of the virtual internal voltage $\underline{\hat{v}}_{\mathrm{vir}}$ is adaptively changed depending on overcurrent conditions.

**Fig. 1**

**Fig. 3a**

**Fig. 3b**

**Fig. 3c**

**Fig. 2a**

**Fig. 2b**

**Fig. 4a**

**Fig. 4b**

**Fig. 5**

**Fig. 7**

**Fig. 6a**

**Fig. 6b**

**Fig. 8a**

**Fig. 8b**

Europäisches
Patentamt

European
Patent Office

Office européen
des brevets

## EUROPEAN SEARCH REPORT

**Application Number**

EP 24 16 9470

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AWAL M A ET AL: "Grid-Forming Nature Retaining Fault Ride-Through Control", 2023 IEEE APPLIED POWER ELECTRONICS CONFERENCE AND EXPOSITION (APEC), IEEE, 19 March 2023 (2023-03-19), pages 2753-2758, XP034350969, DOI: 10.1109/APEC43580.2023.10131145 [retrieved on 2023-05-31] | 1,2,6,7, 10,11,15 | INV. H02J3/00 H02M1/00 H02M1/32 ADD. H02J3/38 |
| A | * paragraph [II.B]; figure 3 * <br> * paragraph [III.A]; figure 5 * | 3-5,8,9, 12-14 | |
| A | GROS DOMINIC ET AL: "Towards constrained grid-forming control", 2023 59TH ANNUAL ALLERTON CONFERENCE ON COMMUNICATION, CONTROL, AND COMPUTING (ALLERTON), IEEE, 26 September 2023 (2023-09-26), pages 1-6, XP034468949, DOI: 10.1109/ALLERTON58177.2023.10313424 [retrieved on 2023-11-14] * figure 2 * | 1 | |
| A | BHAGWAT PRAJWAL ET AL: "Three-phase grid-forming droop control for unbalanced systems and fault ride through", 2023 IEEE POWER & ENERGY SOCIETY GENERAL MEETING (PESGM), IEEE, 16 July 2023 (2023-07-16), pages 1-5, XP034430409, DOI: 10.1109/PESGM52003.2023.10252580 [retrieved on 2023-09-25] * figure 2 * | 1 | TECHNICAL FIELDS SEARCHED (IPC) <br><br> H02J |

The present search report has been drawn up for all claims

| Place of search | Date of completion of the search | Examiner |
|---|---|---|
| Munich | 26 September 2024 | Maucher, Bastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LINBIN HUANG** ; **HUANHAI XIN** ; **ZHEN WANG et al.** Transient stability analysis and control design of droop-controlled voltage source converters considering current limitation.. *IEEE Transactions on Smart Grid 10.1*, 2017, 578-591
- **ROSSO, ROBERTO** ; **SOENKE ENGELLKEN** ; **MARCO LISERRE**. On the implementation of an FRT strategy for grid-forming converters under symmetrical and asymmetrical grid faults. *IEEE Transactions on Industry Applications*, 2021, vol. 57 (5), 4385-4397
- **TIANWEN ZHENG** ; **LAIJUN CHEN** ; **YAN GUO** ; **SHENGWEI MEI**. Comprehensive control strategy of virtual synchronous generator under unbalanced voltage conditions. *IET Generation, Transmission & Distribution*, 2018, vol. 12 (7), 1621-1630